# EUROPEAN PATENT APPLICATION

(11) **EP 4 640 433 A1**
(43) Date of publication of application: **29.10.2025**
(21) Application number: 25171038.0
(22) Date of filing: 16.04.2025
(51) Int. Cl.: B41J 2/175

(54) **INK CONTAINER, INK PACK, AND, MANUFACTURING METHOD**

(30) Priority: 23.04.2024 JP 2024069658
(71) Applicant: CANON KABUSHIKI KAISHA, Tokyo 146-8501 (JP)
(72) Inventor: KOZUKA, Yuki, Tokyo 146-8501 (JP); YOSHIDA, Kazuyuki, Tokyo 146-8501 (JP); EDA, Katsumi, Tokyo 146-8501 (JP); KUDO, Satoshi, Tokyo 146-8501 (JP); INOMATA, Hiroshi, Tokyo 146-8501 (JP)
(74) Representative: Canon Europe Limited

(57) **Abstract**

An object is to provide an ink container (101) that allows for reuse of as many members as possible and may contribute to realization of a sustainable society such as a decarbonized/recycling society. The ink container (101) includes a bag body (201), a derivation member (202), and a fixation unit. The bag body (201) is configured to be able to contain an ink. The derivation member (202) is configured to be able to derive the ink from inside to outside of the bag body (201). The fixation unit is configured to be able to fix the bag body (201) and the derivation member (202) detachably.

## Description

### BACKGROUND OF THE INVENTION

### Field of the Invention

The present disclosure relates to an ink container, an ink pack, and a manufacturing method.

### Description of the Related Art

In view of realizing a sustainable society, used liquid containers may be collected and manufactured (recycled) as new liquid containers by refilling the liquid containers with liquids (for example, inks). Japanese Patent Laid-Open Application No. 2019-198990 discloses a method of manufacturing a liquid container including a step of preparing a liquid container before recycling and the liquid container manufactured by this manufacturing method.

However, in the manufacturing method in Japanese Patent Laid-Open Application No. 2019-198990, the liquid container is prepared in a state in which a bag (a bag body) that contains the liquid and a liquid derivation member (a derivation member) that derives the liquid are welded to each other. For this reason, even in a state in which the liquid derivation member is reusable, if it is a state in which reuse of the bag is difficult, the liquid derivation member and the bag have to be discarded together.

### SUMMARY

The present invention in its first aspect provides an ink container as specified in claim 1. Optional features may be specified in claims 2 to 14.

The present invention in its second aspect provides an ink pack as specified in claim 15. Optional features may be specified in or derivable from claims 2 to 14.

The present invention in its third aspect provides a manufacturing method as specified in claim 16. Optional features may be specified in claims 17 to 19. Further optional features of the manufacturing method may be derived from and/or present in claims 2 to 14.

Further optional features of the present invention will become apparent from the following description of embodiments with reference to the attached drawings.

### BRIEF DESCRIPTION OF THE DRAWINGS

Fig. 1 is a schematic perspective view illustrating an example of a liquid ejection apparatus in an embodiment;
Fig. 2 is a planar transparent view illustrating an example of a liquid container in an embodiment;
Fig. 3 is an exploded perspective view of the liquid container in an embodiment;
Fig. 4 is a flowchart illustrating a method of manufacturing the liquid container in an embodiment;
Fig. 5 is a planar transparent view illustrating an example of the liquid container in an embodiment;
Fig. 6A is a planar transparent view of an upper adapter applicable to an embodiment;
Fig. 6B is a plan view of a lower adapter applicable to an embodiment;
Fig. 7 is a plan view of a derivation member in an embodiment; and
Fig. 8 is an exploded perspective view of the liquid container in an embodiment.

### DESCRIPTION OF THE EMBODIMENTS

### [First Embodiment]

A technique described in the present specification may contribute to realization of a sustainable society such as a decarbonized/recycling society. In the present embodiment, as the technique that may contribute to the realization of a sustainable society, a liquid container that allows for reuse of as many members as possible is described.

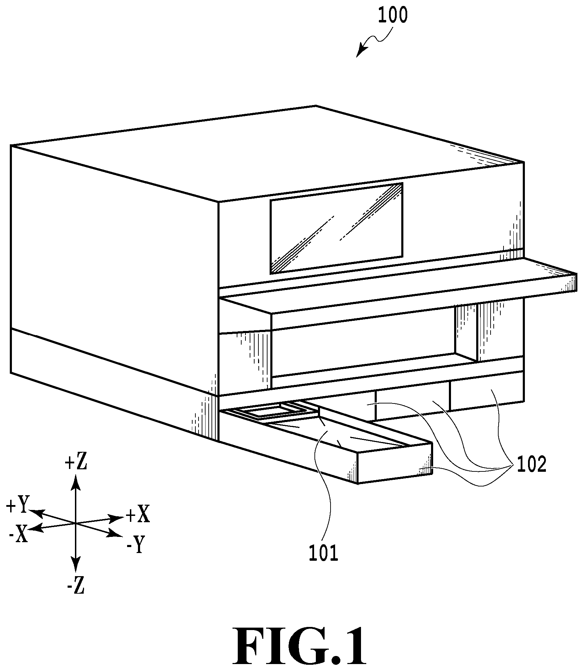

Fig. 1 is a schematic perspective view illustrating an example of a liquid ejection apparatus 100 applicable to the present embodiment. Fig. 1 illustrates arrows X, Y, and Z indicating three directions orthogonal to each other. Note that, the arrows X, Y, and Z are illustrated as needed also in other drawings that are referred to in the present specification so as to correspond to Fig. 1.

The directions indicated by the arrows X, Y, and Z correspond to usage postures of the liquid ejection apparatus 100 and a liquid container 101 in a normal usage state. The normal usage state of the liquid ejection apparatus 100 is a state in which the liquid ejection apparatus 100 is arranged in a horizontal plane to be used.

A Z direction indicates a direction parallel to a direction of gravitational force. A +Z direction is the opposite direction of gravitational force, and a -Z direction is the direction of gravitational force. The Z direction coincides with an up and down direction (a height direction) of the liquid ejection apparatus 100. In the following descriptions, in a case where "up" or "down" is referred to regarding the liquid ejection apparatus 100 and the liquid container 101, unless otherwise stated, it means the up and down direction based on the direction of the arrow Z. Specifically, "up" means the +Z direction, and "down" means the -Z direction. Additionally, a "horizontal direction" means a direction orthogonal to the Z direction.

A Y direction indicates an attachment and detachment direction of the liquid container 101 in the liquid ejection apparatus 100, which is a direction parallel to a front and back direction (a depth direction) of the liquid ejection apparatus 100. A +Y direction indicates a mounting direction of the liquid container 101 onto a main body of the liquid ejection apparatus 100, which is a direction from a front surface side toward a back surface side of the liquid ejection apparatus 100. A -Y direction indicates a direction in which the liquid container 101 is detached from the main body of the liquid ejection apparatus 100, which is a direction from the back surface side toward the front side surface of the liquid ejection apparatus 100.

In the following descriptions, in a case where "front" or "back" is referred to regarding the liquid ejection apparatus 100 and the liquid container 101, unless otherwise stated, it means the front and back direction based on the direction of the arrow Y. Specifically, "front" means the -Y direction, and "back" means the +Y direction.

An X direction indicates a direction parallel to a right and left direction (a width direction) of the liquid ejection apparatus 100. A -X direction is a direction from a right side toward a left side in a case of facing a front surface of the liquid ejection apparatus 100. A +X direction is a direction from the left side toward the right side in a case of facing the front surface of the liquid ejection apparatus 100. In the following descriptions, in a case where "right " or "left " is referred to regarding the liquid ejection apparatus 100 and the liquid container 101, unless otherwise stated, it means the right and left direction based on the direction of the arrow X. Specifically, "right" means the +X direction, and "left" means the -X direction.

### <Liquid Ejection Apparatus 100>

As illustrated in Fig. 1, the liquid ejection apparatus 100 includes multiple cases 102 that are each formed to be able to contain one liquid container 101 containing a liquid therein. In addition to the cases 102, the liquid ejection apparatus 100 also includes a liquid ejection head (not illustrated) that ejects the liquid, a containing unit (not illustrated) of a printing medium (for example, a not-illustrated sheet), a conveyance mechanism (not illustrated) of the printing medium, and the like. The case 102 is formed to be attachable to and detachable from the main body of the liquid ejection apparatus 100. It is possible to supply the liquid from the liquid container 101 to the liquid ejection apparatus 100 by mounting the case 102 on which the liquid container 101 is mounted into the liquid ejection apparatus 100. A specific example of the liquid ejection apparatus 100 of the present disclosure includes an ink jet printing apparatus.

In the present embodiment, an ink pack containing an ink to be ejected from the liquid ejection head is used as the liquid container 101. For example, four liquid containers 101 contain inks of cyan, magenta, yellow, and black, respectively. In addition, the four liquid containers 101 are mounted into the liquid ejection apparatus 100 while the liquid containers 101 are contained in the cases 102, respectively. Note that, types of the inks are not limited to four colors.

In the liquid ejection apparatus 100 of the present embodiment, the liquid ejection head is slidably supported on a guide rail (not illustrated) and is mounted on a carriage (not illustrated) that is reciprocally moved on a straight line along the guide rail by a driving unit (for example, a not-illustrated motor and the like). The printing medium that receives the liquid ejected from the liquid ejection head faces a liquid ejection surface of the liquid ejection head and is conveyed in a direction crossing a movement direction of the carriage by the conveyance mechanism (for example, a conveyance roller and the like).

In the liquid ejection apparatus 100 of the present embodiment, the reciprocal movement of the liquid ejection head and the conveyance of the printing medium at a predetermined pitch are repeated. Then, in synchronization with those movements, multiple types of liquids (in the present embodiment, the above-described four colors of inks) are selectively ejected from the liquid ejection head and applied to the printing medium to form a character, a symbol, an image, and so on. Hereinafter, a posture in which the liquid container 101 is mounted in the liquid ejection apparatus 100 in the normal usage state while the liquid container 101 is contained in the corresponding case 102 is referred to as a "usage posture".

### [Liquid Container 101]

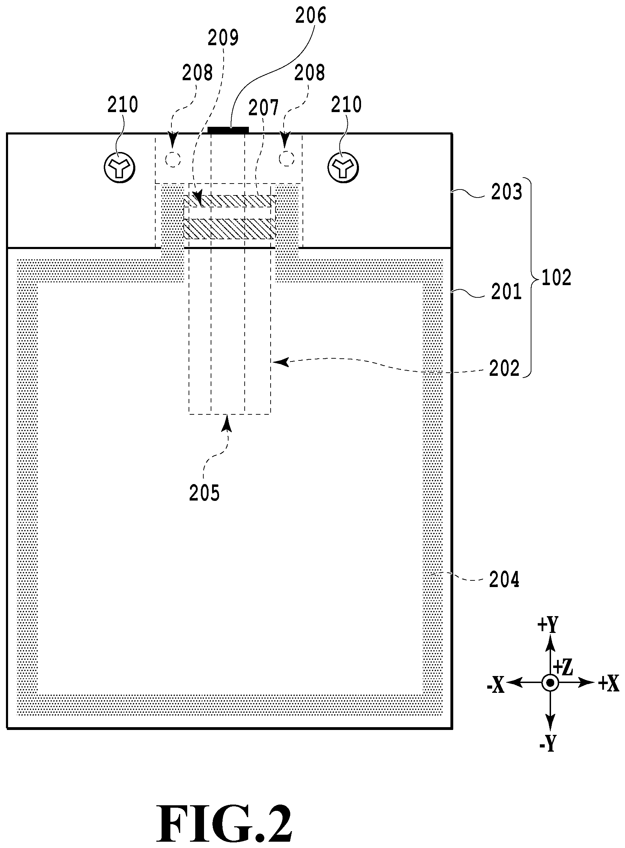

Fig. 2 is a planar transparent view illustrating an example of the liquid container 101 applicable to the present embodiment. The directions indicated by X, Y, and Z represent directions in a case where the liquid container 101 is in the usage state. It is possible to change an orientation of the liquid container 101 freely in a (later-described) manufacturing step of the liquid container 101, a state in which the liquid container 101 is not mounted in the liquid ejection apparatus 100, or the like. Hereinafter, the same applies to a drawing illustrating the liquid container 101 as a single body.

As illustrated in Fig. 2, the liquid container 101 includes a bag body 201 that can contain the liquid. The liquid container 101 includes a derivation member 202 that can derive the liquid from the inside to the outside of the bag body 201. The liquid container 101 includes an adapter 203 (a fixation unit) that can fix the bag body 201 and the derivation member 202 detachably. The derivation member may alternatively be referred to as a spout member or a liquid conduit member.

The bag body 201 has flexibility. The flexibility of the bag body 201 may be such that the bag body 201 bends under its own weight or may be such that the bag body 201 maintains the shape under its own weight but bends under application of a greater load than its own weight. In a planar view, the bag body 201 has a substantially rectangular shape in which the X direction is a transverse direction and the Y direction is a longitudinal direction.

In the present embodiment, the bag body 201 is formed by overlapping two films and joining (for example, welding, adhering, or the like) outer peripheral portions of those films to each other. Note that, the bag body 201 may be formed by folding a single film. The films forming the bag body 201 in the current embodiment are joined to each other by thermal welding. The films are welded to each other while leaving a part of one side of a welding portion 204 of the film to make a space to insert the derivation member 202.

A material forming the bag body 201 has flexibility, gas barrier properties, and liquid imperviousness. That is to say that the material forming the bag body may have one or more predetermined properties, such as a predetermined flexibility, a predetermined gas barrier property, or a liquid imperviousness property. For example, the bag body 201 may be formed of a film including polyethylene terephthalate (PET), nylon, polyethylene, and so on. The bag body 201 may be formed by laminating multiple films including the above-described materials. That is to say that the bag body maybe formed from a laminate material. In this case, for example, an outer layer of the bag body 201 may be formed of a PET or nylon film that has excellent impact resistance, and an inner layer of the bag body 201 may be formed of a polyethylene film that has excellent ink resistance. Additionally, a layer on which aluminum and the like are deposited may be added to the lamination structure forming the bag body 201.

The derivation member 202 has a function of connecting to a connection acceptance unit (not illustrated) of the corresponding liquid ejection apparatus 100 (see Fig. 1). The derivation member 202 includes a flow channel 205 that derives the liquid contained in the bag body 201 to the outside. An opening of the flow channel 205 is sealed by a sealing member 206 (for example, a valve, a film, a tape, or the like). With this configuration, in a state in which the sealing member 206 seals the opening of the flow channel 205, the liquid never leaks from the inside to the outside of the bag body 201 via the flow channel 205.

The connection acceptance unit of the liquid ejection apparatus 100 includes a hollow needle (not illustrated) including an opening (not illustrated), for example. It is possible to supply the liquid from the liquid container 101 to the liquid ejection apparatus 100 with the hollow needle by being inserted into the flow channel 205 through the sealing member 206. For example, the liquid is moved in the order from the flow channel 205, the opening of the hollow needle, and the inside of the hollow needle by driving a pump and the like (not illustrated) provided to the main body of the liquid ejection apparatus 100 in a state in which the liquid container 101 is mounted in the liquid ejection apparatus 100. In the present embodiment, the liquid is supplied as described above.

The derivation member 202 includes a sealing unit 207 that liquid-tightly seals a clearance between an inner peripheral surface of the bag body 201 and an outer peripheral surface of the derivation member 202. That is to say, the sealing unit 207 provides a liquid-tight seal between the inner surface of the bag body and the outer surface of the derivation member. The sealing unit 207 is provided to an outer peripheral surface of a main body of the derivation member 202. The sealing unit 207 has elasticity and wettability. Wettability means that even if a member comes into contact with ink, the member that makes up the component does not melt into the ink.

In the present embodiment, nitrile rubber is used as the sealing unit 207. However, as long as the sealing unit 207 has elasticity and wettability, it is not limited to the nitrile rubber. That is, the sealing portion 207 is not limited to nitrile rubber as long as it has elasticity and ink resistance (wettability). For example, it is possible to use silicone rubber, fluorine-contained rubber, or the like as the sealing unit 207.

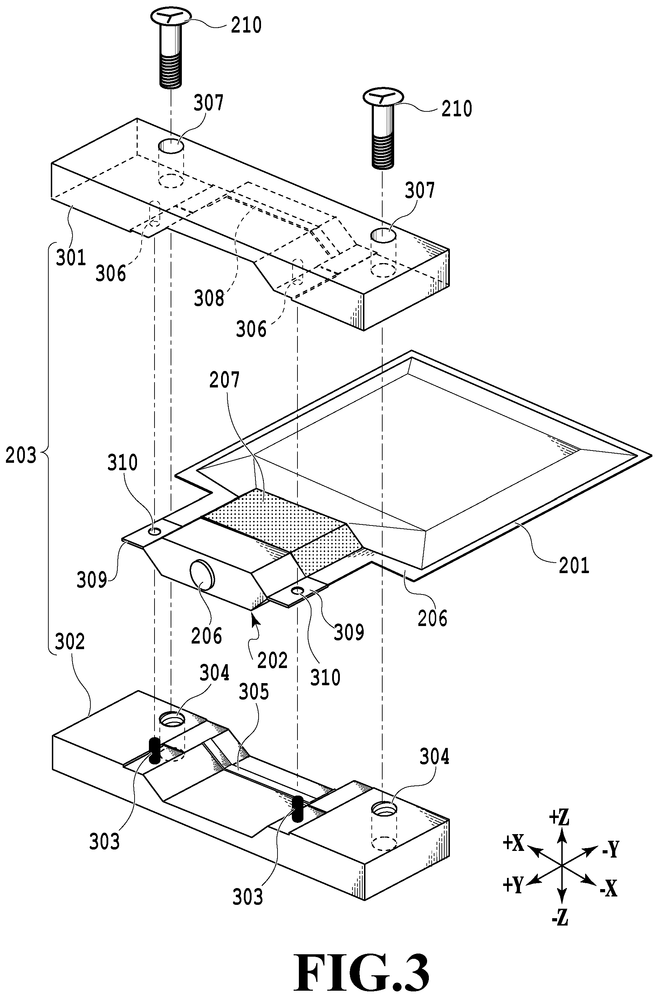

Additionally, the liquid container 101 includes a positioning unit 208 for positioning of the derivation member 202 with respect to the adapter 203. The positioning unit 208 includes a protrusion portion 303 (see Fig. 3) formed on the adapter 203, a through hole 310 (see Fig. 3) formed in the derivation member 202, and a recess portion 306 (see Fig. 3) formed on the adapter 203. The position of the derivation member 202 with respect to the adapter 203 is determined by fitting the protrusion portion 303 into the recess portion 306 through the through hole 310.

The adapter 203 includes a top and bottom pair of an upper adapter 301 (see Fig. 3) and a lower adapter 302 (see Fig. 3). The adapter 203 includes a pinching unit 209 that sandwiches and pinches the sealing unit 207 from the outer side of the bag body 201. The upper adapter 301 and the lower adapter 302 are fixed by being screwed with a screw 210.

A shape of a screw thread of the screw 210 is preferably a special shape (for example, a Y-shape or the like). With the special shape of the shape of the screw thread, it is possible to suppress detachment of the screw 210 by a common Phillips-head screwdriver or flathead screwdriver. Thus, for example, it is possible to suppress detachment of the screw 210 and disassembling of the liquid container 101 by the user although in a state in which a relatively great amount of the liquid is contained in the bag body 201, which causes leaking of the liquid to the outside.

As described above, in the present embodiment, the derivation member 202 is fixed to the bag body 201 without being welded. Specifically, the sealing unit 207 of the derivation member 202 is fixed to the bag body 201 by being inserted into the bag body 201 and sandwiched by the pinching unit 209 of the adapter 203 from the outer side of the bag body 201.

Fig. 3 is an exploded perspective view of the liquid container 101 applicable to the present embodiment.

As illustrated in Fig. 3, in the usage posture of the liquid container 101, the lower adapter 302 includes the protrusion portion 303 extending perpendicularly from a surface facing the upper adapter 301 and a screw hole 304 penetrating through the lower adapter 302 in the height direction (the Z direction).

The lower adapter 302 includes a lower pinching unit 305 that is put in contact with a lower surface of the bag body 201. For example, the lower adapter 302 is integrally formed of resin. That is, the lower pinching unit 305 and a portion other than the lower pinching unit 305 are formed of the same material.

Additionally, in the usage posture of the liquid container 101, the upper adapter 301 includes the recess portion 306 formed on a surface facing the lower adapter 302 and a screw hole 307 penetrating through the upper adapter 301 in the height direction (the Z direction).

The upper adapter 301 includes an upper pinching unit 308 that is put in contact with an upper surface of the bag body 201. For example, the upper adapter 301 is integrally formed of resin. That is, the upper pinching unit 308 and a portion other than the upper pinching unit 308 are formed of the same material.

A main body portion of the derivation member 202 pinched by the lower pinching unit 305 and the upper pinching unit 308 has a flat shape.

According to this configuration, comparing with a case where the main body portion of the derivation member 202 is cylindrical, it is possible to increase pressing force to be received in a case where the main body portion of the derivation member 202 is pinched by the lower pinching unit 305 and the upper pinching unit 308. Accordingly, with the sealing unit 207 being provided to the main body portion of the derivation member 202 having the flat shape, it is possible to improve the sealing properties more than a case where the main body portion of the derivation member 202 is cylindrical.

The derivation member 202 has a flat plate portion 309 in a flat plate shape protruding out of the bag body 201 in a state in which the sealing unit 207 is inserted in the bag body 201. In the usage posture of the liquid container 101, the through hole 310 penetrating through the flat plate portion 309 in the height direction (the Z direction) is formed in the derivation member 202. In a case of assembling the liquid container 101, the position of the derivation member 202 with respect to the adapter 203 is determined by fitting the protrusion portion 303 into the recess portion 306 so as to pass through the through hole 310. The derivation member 202 is fixed to the adapter 203 by sandwiching the flat plate portion 309 and the welding portion 204 between the lower adapter 302 and the upper adapter 301 in a state in which the derivation member 202 is inserted in the bag body 201.

With the screw 210 passing through the screw hole 307 and being screwed in the screw hole 304, the sealing unit 207 is sandwiched between the lower pinching unit 305 and the upper pinching unit 308 and the clearance between the inner peripheral surface of the bag body 201 and the outer peripheral surface of the derivation member 202 is liquid-tightly sealed. The lower pinching unit 305 and the upper pinching unit 308 each have a protrusion shape projecting so as to get close to each other from the lower adapter 302 and the upper adapter 301, respectively.

The sealing properties between the inner peripheral surface of the bag body 201 and the outer peripheral surface of the derivation member 202 is maintained by sandwiching the bag body 201 and the sealing unit 207 having elasticity so as to be recessed by the lower pinching unit 305 and the upper pinching unit 308 having the protrusion shape. On the other hand, it is possible to separate the adapter 203 into the lower adapter 302 and the upper adapter 301 in a state in which the screw 210 is unscrewed. In a state in which the lower adapter 302 and the upper adapter 301 are separated from each other, it is possible to draw the derivation member 202 out of the bag body 201 to separate the derivation member 202 and the bag body 201 from each other. According to this configuration, for example, in a case where the bag body 201 is teared but the derivation member 202 is undamaged, it is possible to reuse the derivation member 202 and manufacture a new liquid container 101.

On the other hand, in a case where the derivation member 202 is broken but the bag body 201 is undamaged, it is possible to reuse the bag body 201 and manufacture a new liquid container 101. As a matter of course, in a case where the bag body 201 and the derivation member 202 are undamaged, it is possible to reuse both and manufacture a new liquid container 101. A manufactured new liquid container may be considered a remanufactured liquid container which comprises one or more of a reused derivation member, a reused bag body, a reused lower adapter and a reused upper adapter. In some embodiments, the components of the remanufactured liquid container may be repaired before being reused. The term manufacture is considered to encompass remanufacture.

Additionally, in a case where the lower adapter 302 is broken but the upper adapter 301 is undamaged, it is possible to reuse the upper adapter 301 and manufacture a new liquid container 101. On the other hand, in a case where the upper adapter 301 is broken but the lower adapter 302 is undamaged, it is possible to reuse the lower adapter 302 and manufacture a new liquid container 101. As a matter of course, in a case where the upper adapter 301 and the lower adapter 302 are undamaged, it is possible to reuse the both and manufacture a new liquid container 101.

As described above, the liquid container 101 of the present embodiment is formed so as to be able to reuse as many members as possible. In contrast, in the technique in Japanese Patent Laid-Open Application No. 2019-198990, since the bag and the liquid derivation member are welded to each other, in a case where one of them is not in a usable state, both the bag and the liquid derivation member have to be discarded together even if the other one is in a reusable state. However, in the present embodiment, since it is possible to individually separate the bag body 201 and the derivation member 202 from each other and the upper adapter 301 and the lower adapter 302 from each other, only a member that is difficult to be reused may be replaced and a new liquid container 101 may be manufactured. As described above, the liquid container 101 of the present embodiment that is formed to be able to reuse many members may contribute to the realization of a sustainable society.

### <Method of Manufacturing Liquid Container>

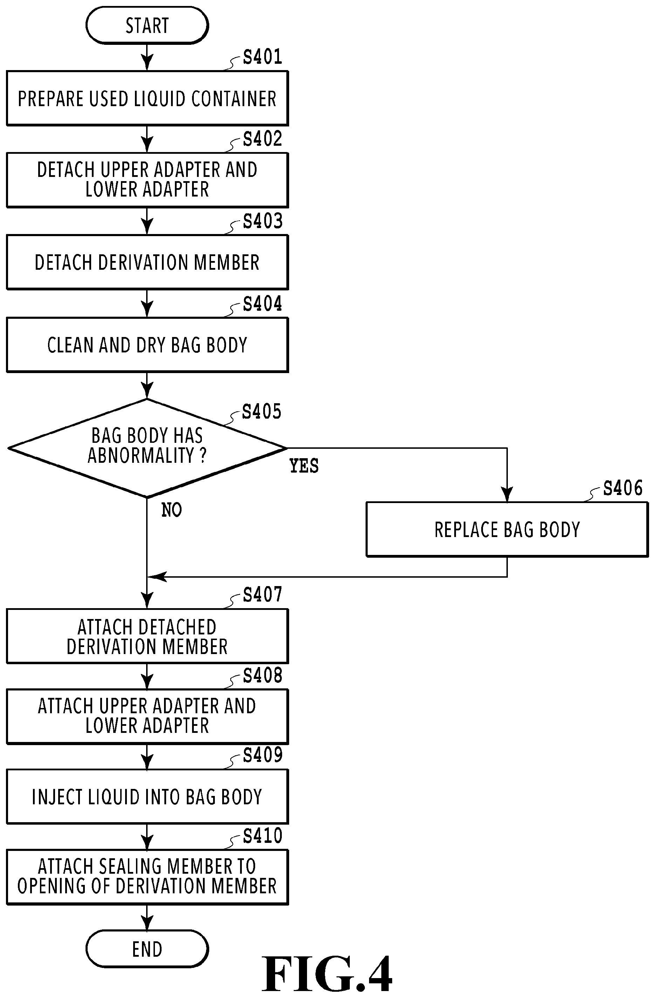

Fig. 4 is a flowchart illustrating a method of manufacturing the liquid container. Fig. 4 illustrates a method of manufacturing a new liquid container by collecting a member that is reusable out of multiple members forming the liquid container. Hereinafter, for the sake of convenient description, the liquid container that is a target of the collection of the member is referred to as a "used liquid container", and the liquid container that is manufactured newly by using the collected member is referred to as a "new liquid container". Additionally, as needed, the member detached from the used liquid container is referred to as a "used member". For example, the bag body detached from the used liquid container is referred to as a "used bag body".

In Fig. 4, a case where the bag body 201 (see Fig. 2 and so on) is collected from the used liquid container 101 (see Fig. 1) and the new liquid container including the bag body is manufactured is assumed and described. However, the collected member is not limited to the bag body 201 as long as it is detachable from the liquid container 101. For example, the derivation member 202 (see Fig. 2 and so on), the upper adapter 301 (see Fig. 3 and so on), the lower adapter 302 (see Fig. 3 and so on), or the like may be collected. As a matter of course, multiple members may be collected from one or more used liquid containers to manufacture a single new liquid container. Note that, a symbol "S" in description of each processing means a step in the flowchart.

In S401, the used liquid container 101 is prepared. For example, it is preferable to prepare the liquid container 101 that is determined to be in a state of being deficient in the liquid amount, which is determined by obtaining a remaining amount of the liquid by a control device (for example, a not-illustrated CPU) while the liquid container 101 is mounted in the liquid ejection apparatus 100 (see Fig. 1). It is preferable that the remaining amount of the liquid in the prepared used liquid container 101 be as small as possible. However, it is possible to manufacture the new liquid container regardless of the remaining amount of the liquid in the used liquid container 101. After S401 is performed, processing in S402 is performed.

In S402, the upper adapter 301 and the lower adapter 302 are detached from the used liquid container 101. After S402 is performed, processing in S403 is performed.

In S403, the derivation member 202 is detached from the used bag body 201. After S403 is performed, processing in S404 is performed.

In S404, the used bag body 201 is cleaned and dried. After washing out the liquid, a foreign substance, and so on remaining in the used bag body 201, drying is performed subsequently, and thus a state in which no water is adhered on the used bag body 201 is obtained. After S404 is performed, processing in S405 is performed.

In S405, whether the used bag body 201 has an abnormality is determined. In S405, the used bag body 201 is inspected, and in a case where it is determined that it is difficult to reuse the bag body as a result of the inspection, it is determined that there is an abnormality. For example, appearance inspection is performed on the used bag body 201, and in a case where it is found out that the bag body 201 is teared as a result of the appearance inspection, it is determined that there is an abnormality. Note that, the appearance inspection may be performed visually or performed with a camera.

Alternatively, in a case where air leaking inspection using a publicly-known inspection apparatus is performed and it is detected that the air is leaked from the bag body 201, it may be determined that the bag body 201 has an abnormality. If it is determined that the bag body 201 has an abnormality (YES in S405), processing in S406 is performed. On the other hand, if it is determined that the bag body 201 has no abnormality (NO in S405), processing in S407 is performed.

In S406, the used bag body 201 determined to have an abnormality is replaced with a new bag body. For example, the teared used bag body 201 is replaced with an unused bag body (in the initial state). Note that, the used bag body 201 determined to have an abnormality may be replaced with the unused bag body (in the initial state) or may be replaced with an auxiliary used bag body determined to have no abnormality. For example, in a case where it is determined that the used derivation member has an abnormality and it is determined that the used bag body attached to the derivation member has no abnormality, the bag body may be collected so as to be able to attach the bag body as the new bag body. After S406 is performed, processing in S407 is performed.

In S407, the derivation member detached in S403 is attached to the bag body without fixing.

Specifically, the sealing unit 207 of the derivation member 202 detached in S403 is inserted into the opening of the bag body without fixing (for example, welding). After S407 is performed, processing in S408 is performed.

In S408, the upper adapter and the lower adapter are attached. Note that, considering reuse of as many members as possible, it is preferable to attach the upper adapter 301 and the lower adapter 302 that are detached in S402. After S408 is performed, processing in S409 is performed.

In S409, the liquid is injected into the bag body. After S409 is performed, processing in S410 is performed.

In S410, a new sealing member 206 (see Fig. 2 and so on) is attached to the opening of the derivation member 202.

With the above-described steps, it is possible to collect the reusable members as many as possible from one or more used liquid containers 101 and manufacture a single new liquid container.

As described above, in the present embodiment, the bag body is not cut off in injecting the liquid into the used bag body. Accordingly, unlike the manufacturing method in Japanese Patent Laid-Open Application No. 2019-198990, there is no torn piece of the bag body as waste in injecting the liquid into the used bag body.

Additionally, in the present embodiment, unlike the manufacturing method in Japanese Patent Laid-Open Application No. 2019-198990, the opening formed to inject the liquid is not sealed by welding. Accordingly, in a case where a welding operation has a problem, no liquid is leaked from a portion on which the welding is performed.

Moreover, in the present embodiment, even in a case where there is a member that is difficult to be reused, it is possible to use another reusable member in a case of manufacturing the new liquid container by collecting the other reusable member as a reserve.

Therefore, according to the technique in the present disclosure, it is possible to provide the liquid container that allows for reuse of as many members as possible. Eventually, it is possible to provide the liquid container that may contribute to the realization of a sustainable society such as a decarbonized/recycling society.

### [Second Embodiment]

Hereinafter, a second embodiment of the technique in the present disclosure is described with reference to the drawing. In the following descriptions, a configuration similar to or corresponding to the above-described embodiment is provided with the same reference numerals while omitting the description, and a different point is mainly described. An object of the present embodiment is to provide the liquid container with further improved sealing properties.

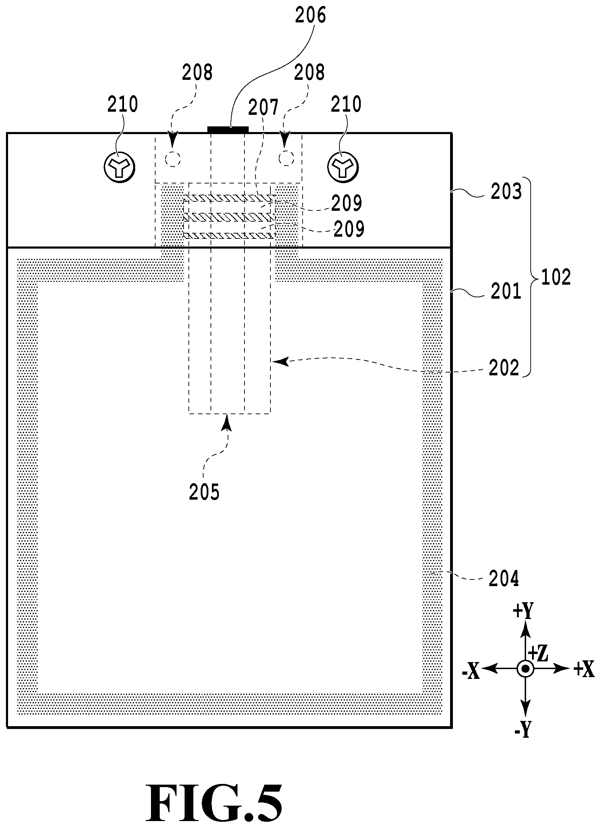

Fig. 5 is a planar transparent view illustrating an example of the liquid container 101 applicable to the present embodiment.

As illustrated in Fig. 5, in the usage posture of the liquid container 101, the adapter 203 of the present embodiment includes multiple pinching units 209 arranged along a direction in which the liquid is derived (the Y direction). In the present embodiment, two pinching units 209 pinch the sealing unit 207 from the outer side of the bag body 201. Note that, in a case where there are three or more pinching units 209, intervals of the arrangement of these pinching units 209 may be equal to each other or different from each other.

According to this configuration, even in a case where liquid leak occurs in a position pinched by the pinching unit 209 arranged on a proximal side (an inner side of the bag body) of the derivation member 202, it is possible to stop the liquid leak in a position pinched by the pinching unit 209 arranged on a distal side of the derivation member 202. That is, even in a case where liquid leak occurs in a position pinched by the pinching unit 209 arranged on a -Y direction side, it is possible to stop the liquid leak in a position pinched by the pinching unit 209 arranged on a +Y direction side.

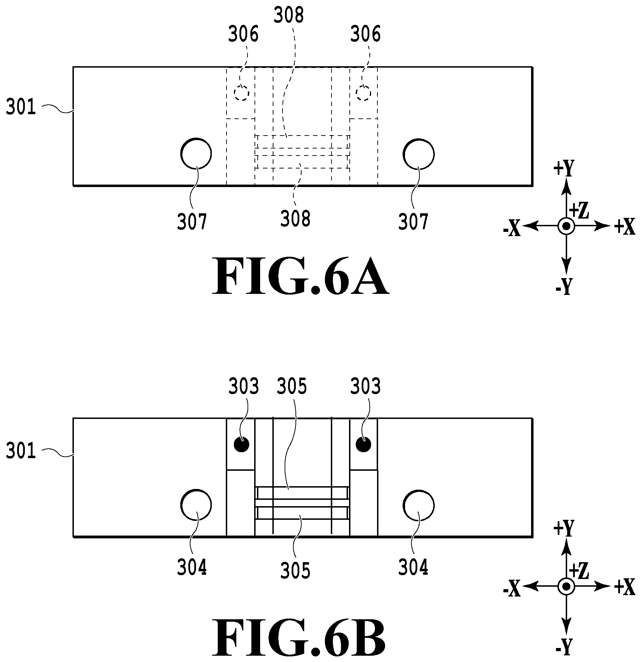

Fig. 6A is a planar transparent view of the upper adapter 301 applicable to the present embodiment.

As illustrated in Fig. 6A, in the usage posture of the liquid container 101 (see Fig. 5), the upper adapter 301 of the present embodiment includes multiple (two in Fig. 6A) upper pinching units 308 arranged along the Y direction.

Fig. 6B is a plan view of the lower adapter 302 applicable to the present embodiment.

As illustrated in Fig. 6B, in the usage posture of the liquid container 101 (see Fig. 5), the lower adapter 302 of the present embodiment includes multiple (two in Fig. 6B) lower pinching units 305 arranged along the Y direction. In the present embodiment, in a state in which the upper adapter 301 and the lower adapter 302 are fixed, the two upper pinching units 308 and the two lower pinching units 305 face each other, respectively.

According to this configuration, even in a case where liquid leak occurs in a portion sealed by the upper pinching unit 308 and the lower pinching unit 305 on the proximal side because of a certain reason, it is possible to stop the liquid leak in a portion sealed by the upper pinching unit 308 and the lower pinching unit 305 on the distal side.

Therefore, according to the liquid container of the present embodiment, it is possible to improve the sealing properties more than that in the first embodiment.

### [Third Embodiment]

Hereinafter, a third embodiment of the technique in the present disclosure is described with reference to the drawing. In the following descriptions, a configuration similar to or corresponding to the above-described embodiment is provided with the same reference numerals while omitting the description, and a different point is mainly described. An object of the liquid container of the present embodiment is to suppress liquid leak with a smaller number of parts than that in the above-described embodiment.

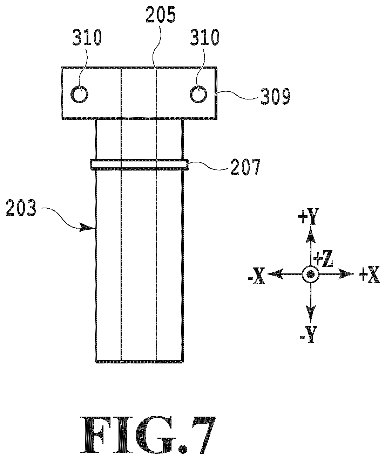

Fig. 7 is a plan view of the derivation member 202 applicable to the present embodiment.

As illustrated in Fig. 7, the derivation member 202 of the present embodiment includes the sealing unit 207 in a ring shape formed to surround an outer periphery of the main body portion. In the present embodiment, the sealing unit 207 is a part of the derivation member 202 and is a rib formed of the same material as that of the main body portion of the derivation member 202. In the present embodiment too, the sealing unit 207 is pinched by the pinching unit 209 (see Fig. 2 and so on). In a state in which the sealing unit 207 is pinched by the pinching unit 209, the sealing unit 207 liquid-tightly seals the clearance between the outer peripheral surface of the derivation member 202 (see Fig. 2 and so on) and the inner peripheral surface of the bag body 201 (see Fig. 2 and so on).

According to this configuration, it is possible to maintain the sealing properties of the clearance between the outer peripheral surface of the derivation member 202 and the inner peripheral surface of the bag body 201 without mounting an elastic member (for example, nitrile rubber or the like) on the derivation member 202 as the sealing unit 207.

That is, according to the liquid container of the present embodiment, it is possible to suppress liquid leak with a smaller number of parts than that in the first and second embodiments. As described above, the reduction of the number of the members forming the liquid container may contribute to the realization of a sustainable society.

### [Fourth Embodiment]

Hereinafter, a fourth embodiment of the technique in the present disclosure is described with reference to the drawing. In the following descriptions, a configuration similar to or corresponding to the above-described embodiment is provided with the same reference numerals while omitting the description, and a different point is mainly described. An object of the liquid container of the present embodiment is to provide the liquid container that allows for the collection of as many members as possible.

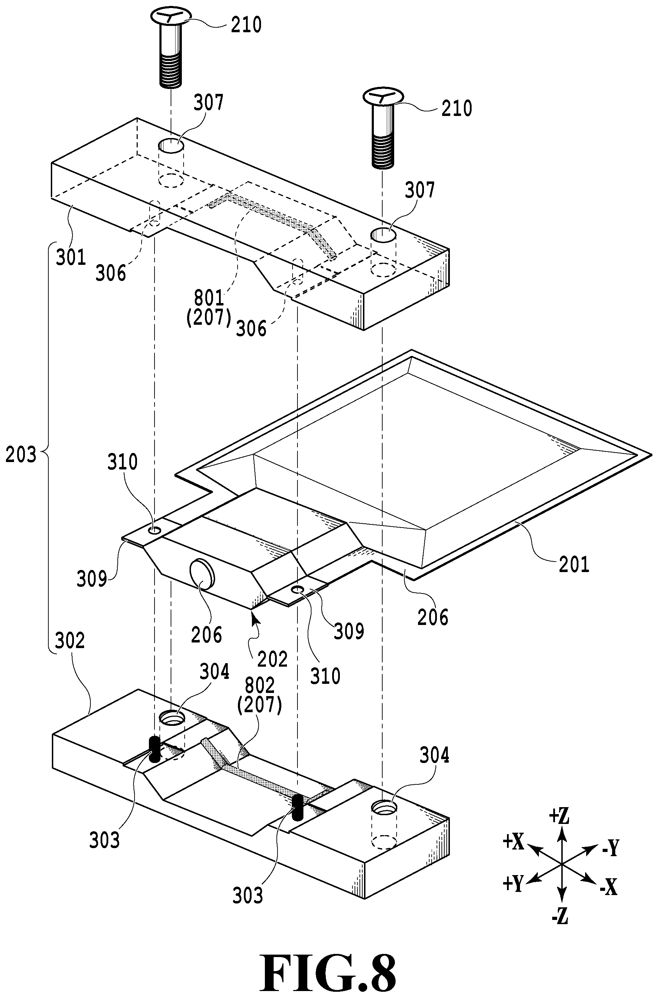

Fig. 8 is an exploded perspective view of the liquid container 101 applicable to the present embodiment.

As illustrated in Fig. 8, the derivation member 202 of the present embodiment does not include the sealing unit 207. The sealing unit 207 of the present embodiment is arranged on the upper adapter 301 and the lower adapter 302. In the present embodiment, the inner peripheral surface of the sealing unit 207 presses the outer peripheral surface of the bag body 201 to liquid-tightly seal the clearance between the inner peripheral surface of the bag body 201 and the outer peripheral surface of the derivation member 202. The lower adapter 302 includes a lower sealing unit 802 that functions as the sealing unit 207 and is put in contact with the lower surface of the bag body 201.

In the present embodiment, an elastic member (for example, nitrile rubber, silicone rubber, fluorine-contained rubber, or the like) that functions as the lower sealing unit 802 is fixed on the lower adapter 302 by a method such as welding, for example. That is, in the lower adapter 302 of the present embodiment, the lower sealing unit 802 and a portion other than the lower sealing unit 802 are formed of different materials.

The upper adapter 301 includes an upper sealing unit 801 that functions as the sealing unit 207 and is put in contact with the upper surface of the bag body 201. In the present embodiment, an elastic member (for example, nitrile rubber, silicone rubber, fluorine-contained rubber, or the like) that functions as the upper sealing unit 801 is fixed on the upper adapter 301 by a method such as welding, for example. That is, in the upper adapter 301 of the present embodiment, the upper sealing unit 801 and a portion other than the upper sealing unit 801 are formed of different materials.

In the present embodiment, the screw 210 passes through the screw hole 307 and is screwed in the screw hole 304. Thus, the bag body 201 and the derivation member 202 are sandwiched between the lower sealing unit 802 and the upper sealing unit 801, the clearance between the inner peripheral surface of the bag body 201 and the outer peripheral surface of the derivation member 202 is liquid-tightly sealed. As described above, with the bag body 201 and the sealing unit 207 being pinched by the lower sealing unit 802 and the upper sealing unit 801 having elasticity and protrusion shapes, the sealing properties between the inner peripheral surface of the bag body 201 and the outer peripheral surface of the derivation member 202 are maintained.

On the other hand, in a state in which the screw 210 is unscrewed, it is possible to separate the adapter 203 into the lower adapter 302 and the upper adapter 301. In a state in which the lower adapter 302 and the upper adapter 301 are separated from each other, it is possible to release the pinching by the lower sealing unit 802 and the upper sealing unit 801, draw the derivation member 202 out of the bag body 201, and separate the derivation member 202 and the bag body 201 from each other.

It is possible to collect the reusable members as many as possible also with the above-described configuration.

### [Other Embodiments]

Although the bag body in which the two films are welded is used in the above-described embodiment(s), a bag body of a gusset type including a gusset portion may be used.

Although a single elastic member (nitrile rubber) is used as the sealing unit in the first and second embodiments, multiple elastic members may be attached to the derivation member along the direction in which the liquid is derived (the Y direction). Multiple sealing members may be provided in the fourth embodiment.

In a case where the multiple elastic members are attached to the derivation member as the sealing unit, it is preferable to form the pinching unit in a position corresponding to each of the elastic members. In a case where three or more elastic members are attached to the derivation member as the sealing units, intervals at which the elastic members are arranged may be equal to each other or different from each other.

Although a single rib is formed as the sealing unit in the third embodiment, multiple ribs may be formed as the sealing units along the direction in which the liquid is derived (the Y direction). In a case where three or more ribs are formed, intervals at which the ribs are formed may be equal to each other or different from each other. In a case where the multiple ribs are formed as the sealing units, it is preferable to form the pinching unit in a position corresponding to each of the ribs.

Additionally, one or more elastic members and one or more ribs may be arranged on a single derivation member as the sealing units along the direction in which the liquid is derived (the Y direction). As described above, in a case where a combination of the multiple elastic members and ribs is arranged as the sealing units, it is preferable to form the pinching unit in a position corresponding to each of the elastic members and ribs.

The order of performing the steps illustrated in Fig. 4 may be switched or omitted as needed. For example, the order of performing S404 and S405 may be inverted. As a matter of course, multiple steps may be performed concurrently.

According to the ink container of the present disclosure, it is possible to reuse as many members as possible.

While the present disclosure has been described with reference to embodiments, it is to be understood that the disclosure is not limited solely to the disclosed embodiments. The scope of the following claims is to be accorded the broadest interpretation so as to encompass all such modifications and equivalent structures and functions as would be understood by the skilled addressee. Each discussed embodiment above can be implemented solely or as a combination of a plurality of the embodiments or features thereof where necessary or where the combination of elements or features from individual embodiments in a single embodiment is beneficial.

## Claims

1. An ink container (101), comprising:
a bag body (201) configured to contain an ink;
a derivation member (202) configured to derive the ink from inside to outside of the bag body (201); and
a fixation unit configured to fix the bag body (201) and the derivation member (202) detachably.

2. The ink container (101) according to claim 1, wherein
the derivation member (202) is inserted in the bag body (201) without being welded.

3. The ink container (101) according to claim 1 or 2, wherein
the derivation member (202) includes a sealing unit (207) configured to seal a clearance between the bag body (201) and the derivation member (202).

4. The ink container (101) according to claim 3, wherein
the sealing unit (207) is an elastic member having ink resistance.

5. The ink container (101) according to claim 4, wherein
the elastic member is nitrile rubber, silicone rubber, or fluorine-contained rubber.

6. The ink container (101) according to any one of claims 3 to 5, wherein
the fixation unit includes a pinching unit (209) configured to pinch the sealing unit (207).

7. The ink container (101) according to claim 6, wherein
the fixation unit includes a plurality of the pinching units (209) configured to pinch the sealing unit (207), and
each of the plurality of the pinching units (209) is arranged along a direction in which the ink is derived.

8. The ink container (101) according to any one of claims 3 to 7, wherein
the sealing unit (207) comprises a rib in a ring shape formed to surround an outer periphery of a main body portion of the derivation member (202).

9. The ink container (101) according to claim 8, wherein
the rib is formed of the same material as that of the main body portion of the derivation member (202).

10. The ink container (101) according to any one of claims 1 to 9, wherein
the fixation unit includes a sealing unit (801,802) configured to seal a clearance between the bag body (201) and the derivation member (202) by pinching the bag body (201) and the derivation member (202) from outside of the bag body (201).

11. The ink container (101) according to claim 10, wherein
the sealing unit (801,802) is an elastic member.

12. The ink container (101) according to claim 11, wherein
the elastic member is nitrile rubber, silicone rubber, or fluorine-contained rubber.

13. The ink container (101) according to any one of claims 10 to 12, wherein
the fixation unit includes a plurality of the sealing units (801,802) arranged along a direction in which the ink is derived.

14. The ink container (101) according to any one of claims 1 to 13, wherein
the ink container (101) is formed so as to be mountable in the ink ejection apparatus (100).

15. An ink pack, comprising:
a bag body (201) configured to contain an ink;
a derivation member (202) configured to derive the ink from inside to outside of the bag body (201); and
a fixation unit formed so as to be attachable to and detachable from an ink jet printing apparatus and configured to fix the bag body (201) and the derivation member (202) detachably.

16. A manufacturing method of an ink container (101) including a bag body (201) capable of containing an ink, a derivation member (202) capable of deriving the ink from inside to outside of the bag body (201), and a fixation unit capable of fixing the bag body (201) and the derivation member (202), the manufacturing method comprising:
attaching the derivation member (202) to the bag body (201) detachably; and
attaching an adapter (203) configured to seal a clearance between the bag body (201) and the derivation member (202) by pinching the bag body (201) and the derivation member (202).

17. The manufacturing method according to claim 16, further comprising:
injecting the ink into the bag body (201).

18. The manufacturing method according to claim 16 or 17, further comprising:
cleaning the bag body (201).

19. The manufacturing method according to any one of claims 16 to 18, further comprising:
inspecting whether the bag body (201) has an abnormality.
